# EUROPÄISCHE PATENTSCHRIFT

(11) **EP 0 799 685 B1**
(45) Veröffentlichungstag und Bekanntmachung des Hinweises auf die Patenterteilung: **17.11.1999**
(21) Anmeldenummer: 97105090.1
(22) Anmeldetag: 26.03.1997
(51) Int. Cl.: B29C 55/08, B29C 55/20, B65G 47/84, B65H 20/16, D06C 3/04

(54) **Spannkluppe mit Rollenlagerung**
Tentering clip with track rollers
Pince de serrage avec rouleaux de guidage

(30) Priorität: 04.04.1996 DE 19613562
(43) Veröffentlichungstag der Anmeldung: 08.10.1997
(73) Patentinhaber: Hoechst Trespaphan GmbH, 66539 Neunkirchen-Wellesweiler (DE)
(72) Erfinder: Hemmerich, Günter, 66386 St. Ingbert (DE)
(74) Vertreter: Luderschmidt, Schüler & Partner GbR

(56) Entgegenhaltungen:
- DE-A- 1 635 250
- DE-A- 2 949 858
- DE-A- 3 939 086
- DE-A- 4 006 440
- FR-A- 2 686 041
- JP-A- 61 124 462
- JP-A- 62 264 150
- US-A- 3 748 704
- US-A- 4 674 159
- US-A- 5 081 750
- US-A- 5 267 378
- US-A- 5 497 957

## Beschreibung

Die Erfindung betrifft eine Spannkluppe mit Rollenlagerung, befestigt in einem Bahnträger einer Folienreckmaschine, mit einem biegsamen, vertikal eingespannten Führungsband, an das sich horizontale Laufrollen von beiden Seiten her anlegen, und mit einer vertikalen Laufrolle, über die eine Kluppenkette geführt ist.

Zur Orientierung in Querrichtung werden biaxial zu reckende Folien durch einen sogenannten Querstreckrahmen geführt. Dieser Querstreckrahmen weist einen Doppel-T-Träger auf, durch den eine Kluppenkette hindurchläuft. An der Kluppenkette sind Spannkluppen befestigt, die als Greiferelemente die Folienbahn im Randbereich erfassen. In den Spannkluppen befinden sich Lagerrollen, über welche die Kluppenkette läuft, wobei diese Lagerrollen im allgemeinen aus Rillenkugellagern bestehen, die bei der Herstellung mit einem lang wirkenden Schmiermittel versehen werden.

Aus der DE-C - 16 35 250 ist eine Kluppenkette aus Spannkluppen mit Rollenlagerung im Spannrahmen einer Folienreckmaschine bekannt, die eine biegsame, fugenlose und vertikal eingespannte Führungsschiene aufweist, an welche sich die die horizontalen Spannkräfte aufnehmenden horizontalen Laufrollen von beiden Seiten her anlegen, wobei das Gewicht der Kluppenkette von vertikalen Laufrollen getragen wird. Die Einspannung der Führungsschiene ist derart, daß sowohl oberhalb als auch unterhalb der Einspannstelle im wesentlichen symmetrisch zur Ebene des Behandlungsgutes Laufflächen für die horizontalen Laufrollen der Spannkluppen gebildet sind. Dabei ist die Führungsschiene auf einem Steg oder Zapfen eingespannt, der an der Rückwand eines die Kuppenkettenbahn umschließenden Gehäuses angeordnet ist. Das Gehäuse umschließt vollständig die Spannkluppe und nimmt daher sehr viel Platz ein und erhöht das Gewicht der Spannkluppe erheblich, so daß die Kluppenkette ein hohes Gewicht besitzt, wodurch die Konstruktion des Spannrahmens der Folienreckmaschine entsprechend schwer und konstruktiv aufwendig wird.

In der DE-C - 29 49 858 ist eine Kluppenkettenbahn in einem Spannrahmen zum Längs- und Querrecken von Warenbahnen mit einem aus gelenkig miteinander verbundenen Abschnitten bestehenden Kettenbahnträger beschrieben. In den Kettenbahnträger sind fugen- und endlose, rundprofilierte Lauf- und Tragschienen integriert, mit in den Knickstellen zwischen den Abschnitten angeordneten, die Enden der Lauf- und Tragschienen verbindenden schraubenfederartig ausgebildeten Überbrückungsgliedern. Die Lauf- und Tragschienen sind übereinander in vertikaler Ebene angeordneten Haltelagern gelagert, wobei die Enden der Lauf- und Tragschienen in den Knickstellen der Abschnitte des Kettenbahnträgers durch ein zusammengesetztes Federpaket miteinander verbunden sind. Das Federpaket besteht aus Federblättern, die an einem flexiblen Vierkantstab beidseitig angeordnet sind und sich an der Innenfläche des Überbrückungsgliedes abstützen. Der flexible Vierkantstab ist durch das Überbrückungsglied hindurchgeführt.

Aus der DE-C- 39 39 086 ist eine Spannkluppe mit Rollenlagerung bekannt, die in parallel zueinander verlaufenden Führungen zum einen vertikal von einer im Kluppenkörper angeordneten Tragrolle aufgenommen und zum anderen horizontal von einem Paar achsparallel in Laschen drehbeweglich gelagerten Laufrollen geführt ist. Dieses Paar Laufrollen nimmt die auftretenden horizontal auf die Kluppe wirkenden Kräfte auf, wobei die drehbewegliche Lagerung der achsparalle angeordneten Laufrollen mittels eines Kettenbolzens erfolgt, der gleichzeitig die Gelenkverbindung zwischen den die Kuppenkette bildenden Einzelkluppen darstellt.

Durch die Erhöhung der Produktionsgeschwindigkeit treten bei der Reckung der Folien sogenannte "Ölflecken" auf den Folien auf. Diese fleckenartigen Verunreinigungen auf der Folie entstehen durch das Lagerfett der Lagerrollen der Spannkluppen, die die Kluppenkette bilden. Diese Verunreinigungen treten insbesondere verstärkt bei hohen Produktionsgeschwindigkeiten und bei hohen Temperaturen auf. Die frisch gefetteten Lagerrollen neigen dazu, Teilmengen ihres Lagerfetts als Fettnebel abzugeben. Durch die turbulenten Strömungsverhältnisse in der Nähe der Kluppenkette breiten sich diese Fettnebel auch in Richtung Folie aus und schlagen sich im Randbereich der Folie nieder. Die dadurch entstehenden Fettflecken machen sich insbesondere nach der Metallisierung von Elektrofolien als Störstellen bemerkbar.

Zur Vermeidung solcher Verunreinigungen der Folie wurde u.a. eine blechartige Abdeckung am Rand der Kluppenkette in Richtung zur Folie hin angebracht. Diese Abdeckung führt jedoch zu einer schlechteren Durchwärmung des Folienrandes und somit zu breiteren Säumstreifen, da sich der unverstreckte Randbereich der Folie durch die schlechtere Durchwärmung verbreitert. Durch den breiteren Säumstreifen bzw. die eingeschränkte Breitennutzung der Folie ergeben sich erhöhte Rohstoffkosten.

Aus der DE 40 06 440 ist eine Spannkluppe mit einer integralen Abdeckung der Lagerrollen bekannt. Diese integrierte Gußabdeckung ist aufwendig bei der Herstellung. Es ist wünschenswert diese Konstruktion zu vereinfachen.

Aufgabe der Erfindung ist es daher, Spannkluppen der eingangs beschriebenen Art so zu verbessern, daß ein Niederschlag von Schmiermitteln aus den Lagerrollen der Spannkluppen auf die Folie vermieden wird, ohne daß es zu breiteren Säumstreifen der Folie kommt und ohne daß die äußeren Abmessungen der Spannkluppen durch entsprechende Abschirmungen vergrößert werden müssen.

Diese Aufgabe wird erfindungsgemäß durch eine Spannkluppe gemäß Anspruch 1 gelöst.

In Ausgestaltung der Erfindung weist die Schutzhaube auf der Oberseite zwei Löcher auf, die mit entsprechenden Gewindelöchern im Klemmkörper fluchten, und ist die Schutzhaube mittels Schrauben, die durch die Löcher hindurchgeführt und in die Gewindelöcher eingeschraubt sind, auf dem Klemmkörper befestigt.

Die weitere Ausgestaltung der Erfindung ergibt sich aus den Merkmalen der Patentansprüche 3 bis 12.

Durch die komplette Abschirmung der Laufrollen bzw. Lager der Laufrollen durch die Schutzhaube wird die einzelne Spannkluppe so effektiv abgedeckt, daß sich die Schmiermittelnebel an der Innenseite der Schutzhaube niederschlagen und somit die Folie nicht mehr kontaminieren können. Weitere Vorteile der Erfindung sind der Schutz der Laufrollen bei Folienabrissen und die Verhinderung der Verschmutzung der Laufrollen durch äußere Einflüsse, wie beispielsweise aus der Folie austretende Stoffe. Bei Folienabrissen können sich Folienreste, die in den Kettengliedern hängenbleiben, um die, Laufrollen wickeln, wodurch es zu Transportstörungen der Kluppenkette kommt. Folienabrisse während der Produktion machen es erforderlich, die Kluppenkette stillzusetzen, da die Folienreste nur mechanisch und sehr mühsam aus den Laufrollen entfernt werden können.

Eine direkte Abdeckung als Staubschutz der einzelnen Lagerrollen reicht im allgemeinen nicht aus, um den Austritt von Schmiermittelnebel aus den Lagerrollen im gewünschten Umfang zu verhindern, da während des Betriebes bei höheren Produktionsgeschwindigkeiten häufig Undichtigkeiten der Abdeckung auftreten. Gegenüber völlig abgedichteten Lagerrollen bringt die erfindungsgemäße Schutzhaube erhebliche Kostenvorteile, da abgedichtete Lagerrollen doppelt so teuer wie nicht-abgedichtete Lagerrollen sind. Dies führt bei der großen Anzahl von Lagerrollen in einer Kluppenkette zu einer nicht-akzeptablen Verteuerung der Kluppenkette.

Die Erfindung wird im folgenden anhand von Zeichnungen näher erläutert. Es zeigen:
- Figur 1: eine Seitenansicht einer Spannkluppe, abgedeckt mit einer ersten Ausführungsform einer Schutzhaube,
- Figur 2: eine Draufsicht auf die Spannkluppe nach Figur 1,
- Figur 3: eine Seitenansicht der ersten Ausführungsform der Schutzhaube,
- Figur 4: eine Draufsicht der Schutzhaube nach Figur 3, und
- Figur 5: eine perspektivische Ansicht einer zweiten Ausführungsform einer Schutzhaube.

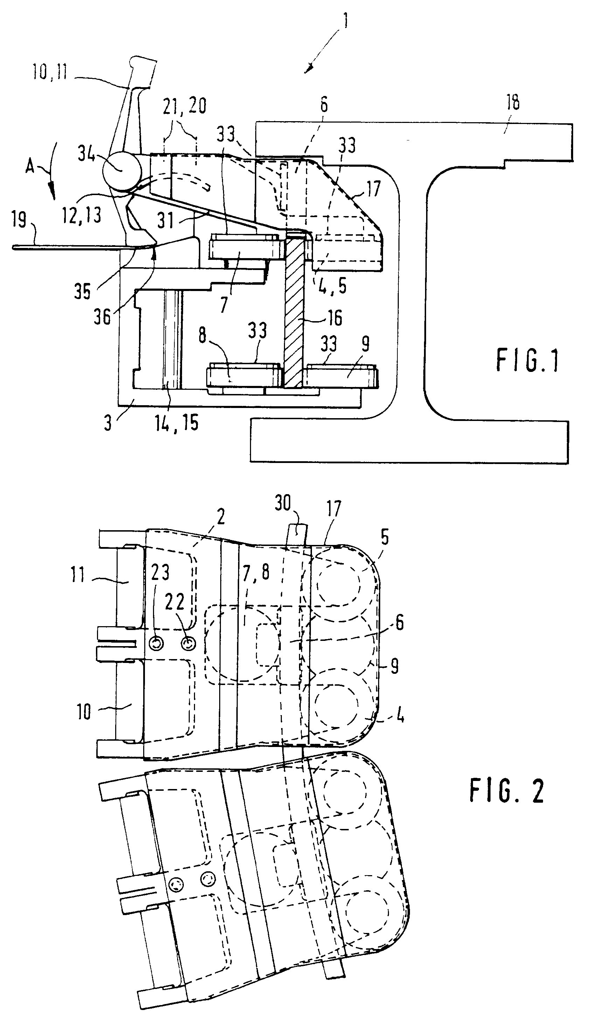

In Figur 1 ist in Seitenansicht eine Spannkluppe 1 gezeigt, die in einem Bahnträger 18, der einen Doppel-T-Querschnitt aufweist, einer Folienreckmaschine angeordnet ist. Die Spannkluppe 1 ist Bestandteil einer Kluppenkette 30 (siehe Figur 2), die entlang einer geschlossenen Führungsbahn beweglich ist. Die Spannkluppe 1 besteht aus einem Klemmkörper 2 und einem Rollteil 3, zwischen denen in einer Folienspannebene 19 eine Folie während der Breitenreckung eingespannt ist. Im Klemmkörper 2 befinden sich drei horizontale Laufrollen 4,5, 7, die eine Dreiecksanordnung bilden, sowie eine vertikale Laufrolle 6. Im Rollteil 3 der Spannkluppe 1 sind zwei horizontale Laufrollen 8 und 9 angeordnet. Über die vertikale Laufrolle 6 ist die Kluppenkette 30 geführt. Eine Schutzhaube 17, deren Umrisse in der Ansicht nach Figur 1 eingezeichnet sind, hat eine Form, die der Geometrie der Laufrollen 4, 5, 6 angepaßt ist, wodurch sichergestellt wird, daß Schmiermittelnebel, der aus den Laufrollen austritt, sich auf der Innenseite der Schutzhaube 17 niederschlägt.

Die Spannkluppe 1 enthält zwei Klappen 10, 11, die um einen Bolzen 34, der am Klemmkörper 2 befestigt ist, drehbar gelagert sind. Die vom Bolzen 34 nach unten weisenden Arme der Klappen 10, 11 klemmen in der Folienspannebene 19 einen Randstreifen der Folie zwischen einer Unterseite 35 der Klappen und einer Auflagefläche 36 des Klemmkörpers 2 ein. Durch Drehung der Klappen 10, 11 gegen den Uhrzeigersinn in Richtung eines gebogenen Pfeils A wird die Klemmung der Folie aufgehoben, und durch Drehen im Uhrzeigersinn der Klappen 10, 11 um den Bolzen 34 erfolgt das Einklemmen der Folie. Klappfedern 12 und 13, beispielsweise Blattfedern, sind unter Vorspannung mit ihrem einen Ende im Klemmkörper 2 gelagert, während ihr anderes Ende mit dem unteren Arm der Klappen 10 und 11, etwas unterhalb des Bolzens 34, verbunden ist. Die Klappfedern 12 und 13 sind konvex nach oben gekrümmt und üben auf die Klappen 10 und 11 einen Drehmoment im Uhrzeigersinn aus, so daß sie die Klappen in ihrer Schließstellung halten. In der Spannkluppe 1 befindet sich ein biegsames, vertikal eingespanntes Führungsband 16, das in nicht gezeigter Weise mittig am Bahnträger 18 befestigt ist. Die folgenden Ausführungen beziehen sich beispielhaft auf eine 6-Rollenkluppe. Sie gelten sinngemäß auch für Spannkluppen mit anderer Rollenzahl, wie z.B. 7 oder 9 Rollen. Die drei horizontalen Laufrollen 4, 5 und 7 im Klemmkörper 2, ebenso wie die beiden horizontalen Laufrollen 8 und 9 im Rollteil 3, liegen von beiden Seiten her an dem Führungsband an, das beispielsweise aus Blechpaketen besteht und für die anliegenden Laufrollen entsprechende Laufflächen bildet. Die Laufrollen 4, 5, 6 und 7 im Klemmkörper 2, ebenso wie die Laufrollen 8 und 9 im Rollteil 3, sind mit Abdeckungen 33 ausgestattet, die als Staubschutz für die Lagerrollen dienen.

Wie aus der Draufsicht in Figur 2 auf die Spannkluppe 1 ersichtlich ist, besitzt die Schutzhaube 17 auf der Oberseite zwei Löcher 22, 23, die mit entsprechenden Gewindelöchern 20, 21 im Klemmkörper 2 fluchten. Nachdem die Schutzhaube 17 auf den Klemmkörper 2 aufgeschoben ist, wird sie mittels Schrauben, die durch die Löcher 22 und 23 sich erstrecken und in die Gewindelöcher 20, 21 eingeschraubt sind, auf dem Klemmkörper 2 befestigt. Aus Figur 2 ist ersichtlich, daß die beiden horizontalen Laufrollen 8, 9 im Rollteil 3 der Spannkluppe 1 rechtwinklig zu der ersten und zweiten horizontalen Laufrolle 4 bzw. 5 im Klemmkörper 2 ausgerichtet sind. In Figur 2 sind zwei Spannkluppen nebeneinander gezeigt, die beispielsweise an der engsten Stelle der Umlenkung der Kluppenkette 30 angeordnet sind. Die Verbindung der beiden Spannkluppen 1, 1 erfolgt durch nicht gezeigte Kettenlaschen, die um Kettenbolzen 14 und 15, wie sie in Figur 1 angedeutet sind, drehbeweglich sind. Dabei können diese Kettenlaschen über nicht gezeigte Hülsen und Buchsen mit den Kettenbolzen verbunden sein. Diese Kettenlaschen sind im Bereich der Kettenbolzen ineinandergeschoben, d.h. eine Kettenlasche hat eine Dicke, die geringfügig kleiner als der Innenabstand der beiden Glieder der anderen Kettenlasche ist. In die Kettenlaschen greifen die Zähne eines nicht gezeigten Zahnrades ein, das die Kluppenkette 30 antreibt.

Die drei horizontalen Laufrollen 4, 5 und 7 des Klemmkörpers 2 sind dreieckförmig in einer Ebene angeordnet, wie aus Figur 2 ersichtlich ist. Die Folienspannebene 19 verläuft mittig in Längsrichtung zu den horizontalen Laufrollen. Die vertikale Laufrolle 6 in Figur 1 ist auf das Führungsband 16 ausgerichtet und befindet sich mit seiner Unterkante auf der Höhe der drei horizontalen Laufrollen 4, 5 und 7.

Eine erste Ausführungsform der Schutzhaube 17 umschließt die erste und zweite horizontale Laufrolle 4, 5 und die vertikale Laufrolle 6. Die dritte horizontale Laufrolle 7 wird von dieser Schutzhaube 17 nicht umschlossen und befindet sich im Klemmkörper 2 zwischen einer schrägen Unterkante 31 der Schutzhaube 17 und der Oberseite des Rollteils 3. Durch diese erste Ausführungsform der Schutzhaube wird die dritte horizontale Laufrolle 7 zwar seitlich nicht abgedeckt, aber nach oben hin, so daß die aus dem Lager hochsteigenden Schmiermittelnebel sich auf der Innenseite der Schutzhaube 17 niederschlagen können.

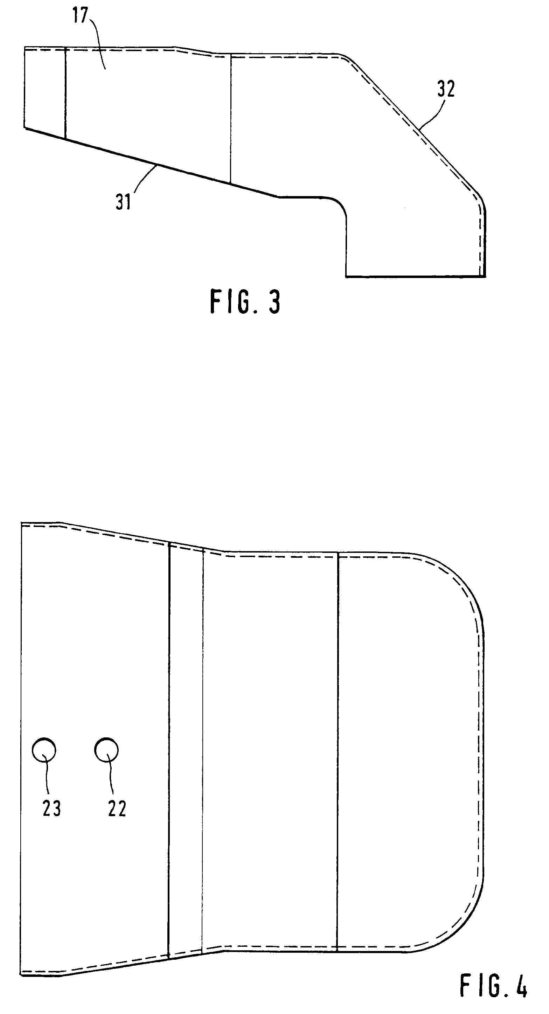

Aus der Seitenansicht der Schutzhaube 17 in Figur 3 ist ersichtlich, daß diese neben der schrägen Unterkante 31 auch eine schräge Oberkante 32 besitzt.

Die Draufsicht auf die Schutzhaube 17 in Figur 4 zeigt die Löcher 22, 23 und den abgerundeten Übergang von den Seitenflächen zu der Frontfläche. Die Seitenflächen verlaufen schräg nach außen in Richtung auf die Hinterfläche der Schutzhaube 17.

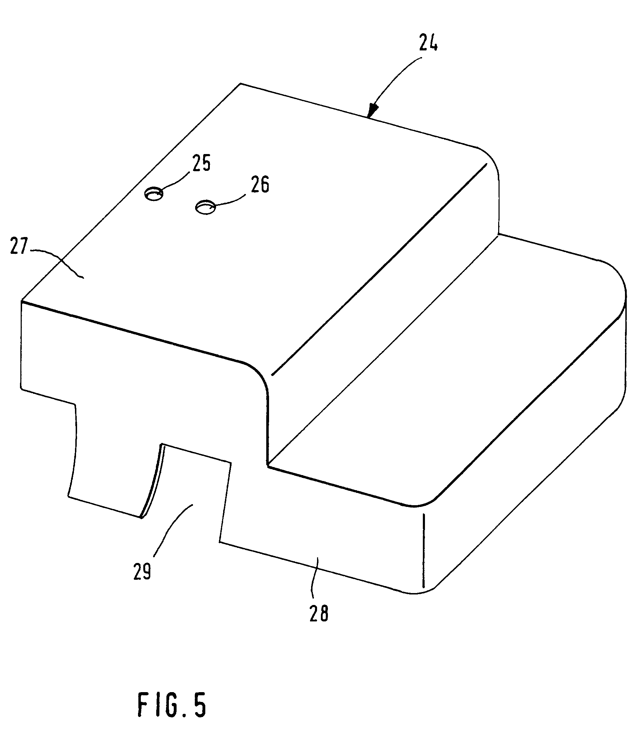

In Figur 5 ist eine zweite Ausführungsform einer Schutzhaube 24 gezeigt, die aus einem Basisteil 28 und einem gegenüber der Vorderkante des Basisteils 28 zurückgesetzten Oberteil 27 besteht. Die Schutzhaube 24 deckt die drei horizontalen Laufrollen 4, 5 und 7 sowie die vertikale Laufrolle 6 des Klemmkörpers 2 nach oben hin voll ab. Zur Vermeidung eines Hitzestaus unter der Schutzhaube 24 weist der Basisteil 28 in jeder Seitenfläche einen Einschnitt 29 auf. Ähnlich wie bei der Schutzhaube 17 befinden sich auf der Oberseite der Schutzhaube 24 zwei Löcher 25 und 26 im Oberteil 27 zum Befestigen der Schutzhaube 24 mittels zweier Schrauben an dem Klemmkörper 2.

Die Schutzhauben 17 und 24 bestehen entweder aus formgepreßtem Material, wie Blech, oder aus tiefgezogenem oder spritzgegossenem Kunststoff.

Ebenso wie der Klemmkörper 2 kann auch der Rollteil 3 von einer Schutzhaube abgedeckt werden, deren Geometrie der Form der Laufrollen 8, 9 im Rollteil angepaßt ist. Dabei kann der Rollteil auch mehr als zwei Laufrollen enthalten.

## Patentansprüche

1. Spannkluppe mit Rollenlagerung, befestigt in einem Bahnträger einer Folienreckmaschine, mit einem biegsamen, vertikal eingespannten Führungsband, an das sich horizontale Laufrollen von beiden Seiten her anlegen, und mit einer vertikalen Laufrolle, über die eine Kluppenkette geführt ist, wobei die Spannkluppe (1) aus einem Klemmkörper (2) und einem Rollteil (3) besteht, wobei der Klemmkörper (2) horizontale Laufrollen (4, 5, 7) und eine vertikale Laufrolle (6) enthält, und von einer auf den Klemmkörper (2) aufgeshobenen Schutzhaube (17; 24) abgedeckt ist, deren Form der Geometrie der Laufrollen angepaßt ist, so daß Schmierstoffnebel aus den Laufrollen sich auf der Innenseite der Schutzhaube (17; 24) niederschlagen.

2. Spannkluppe nach Anspruch 1, dadurch gekennzeichnet, daß die Schutzhaube (17; 24) auf der Oberseite zwei Löcher (22, 23 bzw. 25, 26) aufweist, die mit entsprechenden Gewindelöchern (20, 21) im Klemmkörper (2) fluchten und daß die Schutzhaube mittels Schrauben, die durch die Löcher hindurchgeführt und in die Gewindelöcher (20, 21) eingeschraubt sind, auf dem Klemmkörper (2) befestigt ist.

3. Spannkluppe nach Anspruch 1, dadurch gekennzeichnet, daß die drei horizontalen Laufrollen (4, 5, 7) des Klemmkörpers (2) dreieckförmig in einer Ebene angeordnet sind, und daß die Folienspannebene (19) mittig in Längsrichtung zu den Laufrollen verläuft.

4. Spannkluppe nach Anspruch 1, dadurch gekennzeichnet, daß die vertikale Laufrolle (6) auf das Führungsband (16) hin ausgerichtet ist und mit ihrer Unterkante auf der Höhe der drei horizontalen Laufrollen (4, 5, 7) angeordnet ist.

5. Spannkluppe nach Anspruch 1, dadurch gekennzeichnet, daß die beiden horizontalen Laufrollen (8, 9) im Rollteil (3) der Spannkluppe (1) rechtwinklig zu der ersten und zweiten horizontalen Laufrolle (4, 5) im Klemmkörper (2) ausgerichtet sind.

6. Spannkluppe nach Anspruch 1, dadurch gekennzeichnet, daß die Schutzhaube (17) die erste und zweite horizontale Laufrolle (4, 5) und die vertikale Laufrolle (6) umschließt und daß die dritte horizontale Laufrolle (7) im Klemmkörper (2) zwischen einer schrägen Unterkante (31) der Schutzhaube (17) und der Oberseite des Rollteils (3) angeordnet ist.

7. Spannkluppe nach Anspruch 1, dadurch gekennzeichnet, daß die Schutzhaube (24) aus einem Basisteil (28) und einem gegenüber der Vorderkante des Basisteils (28) zurückgesetzten Oberteil (27) besteht und daß die Schutzhaube (24) die drei horizontalen Laufrollen (4, 5, 7) und die vertikale Laufrolle (6) des Klemmkörpers (2) nach oben hin voll abdeckt.

8. Spannkluppe nach Anspruch 7, dadurch gekennzeichnet, daß der Basisteil (28) in jeder Seitenfläche einen Einschnitt (29) aufweist, der die Gefahr eines Hitzestaus unter der Schutzhaube (24) verringert.

9. Spannkluppe nach Anspruch 1, dadurch gekennzeichnet, daß im Rollenteil (3) zwei vertikale Kettenbolzen (14, 15) angeordnet sind, auf denen ein Kettenglied aufsitzt, in das ein Zahnrad eingreift.

10. Spannkluppe nach Anspruch 1, dadurch gekennzeichnet, daß die Schutzhaube (17, 24) aus formgepreßtem Material, wie Blech, oder aus tiefgezogenem oder spritzgegossenem Kunststoff besteht.

11. Spannkluppe nach Anspruch 1, dadurch gekennzeichnet, daß die Laufrollen (4, 5, 6, 7) im Klemmkörper (2) und die Laufrollen (8, 9) im Rollteil (3) mit Abdeckungen (33) ausgestattet sind.

12. Spannkluppe nach Anspruch 1, dadurch gekennzeichnet, daß der Rollteil (3) mit einer Schutzhaube abgedeckt ist, deren Geometrie den Laufrollen (8, 9) im Rollteil angepaßt ist.

## Claims

1. A tenter clip with a roller mounting, fixed in a web carrier of a film stretching machine with a flexible vertically clamped guide strip against which horizontal running rollers bear from both sides, and with a vertical running roller over which a link chain is guided, the tenter clip (1) consisting of a clamping body (2) and a rolling part (3), the clamping body (2) having horizontal running rollers (4, 5, 7) and one vertical running roller (6) and covered by a protective hood (17, 24) which is pushed onto the clamping body (2) and the shape of which matches the geometry of the running rollers, so that a lubricant mist from the running rollers is deposited on the inside of the protective hood (17, 24).

2. A tenter clip according to claim 1, characterised in that the protective hood (17, 24) has on its upper side two holes (22, 23, 25, 26) aligned with corresponding screw threaded holes (20, 21) in the clamping body (2) and in that the protective hood is fixed on the clamping body (2) by means of screws which are passed through the holes and screwed into the screw threaded holes (20, 21)

3. A tenter clip according to claim 1, characterised in that the three horizontal running rollers (4, 5, 7) of the clamping body (2) are disposed in a triangular arrangement in one plane and in that the film clamping plane (19) extends centrally in a longitudinal direction in relation to the turning rollers.

4. A tenter clip according to claim 1, characterised in that the vertical running roller (6) is orientated at the guide strip (16) and has its bottom edge disposed at the height of the three horizontal running rollers (4, 5, 7).

5. A tenter clip according to claim 1, characterised in that both horizontal running rollers (8, 9) in the rolling part (3) of the tenter clip (1) are aligned at right-angles to the first and second horizontal running rollers (4, 5) in the clamping body (2).

6. A tenter clip according to claim 1, characterised in that the protective hood (17) encloses the first and second horizontal running rollers (4, 5) and the vertical running roller (6) and in that the third horizontal running roller (7) in the clamping body (2) is disposed between an oblique bottom edge (31) of the protective hood (17) and the upper face of the rolling part (2).

7. A tenter clip according to claim 1, characterised in that the protective hood (24) consists of a base part (28) and an upper part (27) which is set back in relation to the front edge of the base part (28) and in that the protective hood (24) fully covers over the top of the three horizontal turning rollers (4, 5, 7) and the vertical running roller (6) of the clamping body (2).

8. A tenter clip according to claim 7, characterised in that the base part (28) has in each side face a recessed part (29) which reduces the risk of a heat build-up under the protective hood (24).

9. A tenter clip according to claim 1, characterised in that there are in the rolling part (3) two vertical link rods (14, 15) on which a chain link is seated into which a gear wheel engages.

10. A tenter clip according to claim 1, characterised in that the protective hood (17, 24) consists of mould-shaped material such as sheet metal or deep-drawn or injection moulded synthetic plastics material

11. A tenter clip according to claim 1, characterised in that the running rollers (4, 5, 6, 7) in the clamping body (2) and the running rollers (8, 9) and the rolling part (3) have covers (33).

12. A tenter clip according to claim 1, characterised in that the rolling part (3) is covered by a protective hood, the geometry of which matches the running rollers (8, 9) in the rolling part.

## Revendications

1. Pince de serrage comportant une assise de rouleaux, fixée dans un support de bande d'une machine d'étirage de feuille, une glissière de guidage qui est flexible, serrée verticalement et contre laquelle des galets de roulement horizontaux sont appliqués des deux côtés, et un galet de roulement vertical par l'intermédiaire duquel une chaîne à pinces est guidée, caractérisée en ce que la pince de serrage (1) comprend un corps de serrage (2) et un élément de roulement (3), le corps de serrage (2) comportant des galets de roulement horizontaux (4, 5, 7) et un galet de roulement vertical (6) et étant recouvert par un capot de protection (17 ; 24) qui est déplacé sur le corps de serrage (2) et dont la forme est adaptée à la géométrie des galets de roulement si bien que les brouillards de lubrifiant sortant des galets de roulement se déposent sur le côté intérieur du capot de protection (17 ; 24).

2. Pince de serrage selon la revendication 1, caractérisée en ce que le capot de protection (17 ; 24) présente sur le côté supérieur deux trous (22, 23 et 25, 26) qui sont alignés avec les trous filetés (20, 21) correspondants dans le corps de serrage (2) et en ce que le capot de protection est fixé sur le corps de serrage (2) à l'aide de vis qui traversent les trous et sont vissées dans les trous filetés (20, 21) .

3. Pince de serrage selon la revendication 1, caractérisée en ce que les trois galets de roulement horizontaux (4, 5 et 7) du corps de serrage (2) sont disposés en triangle dans un plan et en ce que le plan de serrage des feuilles (19) passe au centre dans le sens longitudinal par rapport aux galets de roulement.

4. Pince de serrage selon la revendication 1, caractérisée en ce que le galet de roulement vertical (6) est orienté sur la glissière de guidage (16) et se trouve disposé, par son arête inférieure, à hauteur des trois galets de roulement horizontaux (4, 5 et 7).

5. Pince de serrage selon la revendication 1, caractérisée en ce que les deux galets de roulement horizontaux (8, 9) dans l'élément de roulement (3) sont orientés perpendiculairement aux premier et second galets de roulement horizontaux (4, 5) dans le corps de serrage (2) .

6. Pince de serrage selon la revendication 1, caractérisée en ce que le capot de protection (17) entoure les premier et second galets de roulement horizontaux (4, 5) et le galet de roulement vertical (6) et en ce que le troisième galet de roulement horizontal (7) est disposé dans le corps de serrage (2) entre une arête inférieure (31) oblique du capot de protection (17) et le côté supérieur de l'élément de roulement (3).

7. Pince de serrage selon la revendication 1, caractérisée en ce que le capot de protection (24) se compose d'un élément de base (28) et d'un élément supérieur (27) reculé par rapport à l'arête avant de l'élément de base (28) et en ce que le capot de protection (24) recouvre entièrement vers le haut les trois galets de roulement horizontaux (4, 5 et 7) ainsi que le galet de roulement vertical (6) du corps de serrage (2).

8. Pince de serrage selon la revendication 7, caractérisée en ce que l'élément de base (28) présente, dans chaque surface latérale, une encoche (29) qui réduit le risque de retenue de chaleur sous le capot de protection (24).

9. Pince de serrage selon la revendication 1, caractérisée en ce que dans l'élément de roulement (3) sont disposés deux tourillons verticaux de chaîne (14, 15) sur lesquels repose un maillon de chaîne dans lequel s'engrène une roue d'engrenage.

10. Pince de serrage selon la revendication 1, caractérisée en ce que le capot de protection (17, 24) est réalisé soit dans une matière moulée par compression telle que la tôle soit dans un plastique embouti ou moulé par injection.

11. Pince de serrage selon la revendication 1, caractérisée en ce que les galets de roulement (4, 5, 6, 7) dans le corps de serrage (2) et les galets de roulement (8, 9) dans l'élément de roulement (3) sont munis de caches (33).

12. Pince de serrage selon la revendication 1, caractérisée en ce que l'élément de roulement (3) est recouvert d'un capot de protection dont la géométrie est adaptée aux galets de roulement (8, 9) dans l'élément de roulement.
